# FASCICULE DE BREVET EUROPEEN

(11) **EP 0 550 327 B1**
(45) Date de publication et mention de la délivrance du brevet: **17.01.1996**
(21) Numéro de dépôt: 92403527.2
(22) Date de dépôt: 22.12.1992
(51) Int. Cl.: H02B 1/20, H02G 3/04

(54) **Dispositif de soutien et de guidage de câbles de transmission de signaux électriques ou lumineux**
Stütz- und Führungsgerüst für elektrische und optische Übertragungskabeln
Support and guiding means for cables transmitting electrical or light signals

(30) Priorité: 30.12.1991 FR 9116315
(43) Date de publication de la demande: 07.07.1993
(73) Titulaire: ALCATEL CIT, F-75008 Paris (FR)
(72) Inventeur: Jamet, Daniel, F-91620 Nozay (FR); Guiberteau, Christian, F-91160 Longjumeau (FR); Roger, Jacques, F-78320 Levis St. Nom (FR); Verdurand, Rémi, F-92200 Neuilly (FR)
(74) Mandataire: El Manouni, Josiane

(56) Documents cités:
- WO-A-91/04597
- DE-A- 1 565 978
- DE-U- 8 332 257
- US-A- 4 136 257

## Description

La présente invention concerne un dispositif de soutien et de guidage de câbles de transmission de signaux électriques ou lumineux.

Ce dispositif est notamment destiné à être utilisé dans des installations de télécommunication, comprenant des armoires ou bâtis munis d'une pluralité de châssis équipés d'un certain nombre de carte de circuit imprimés amovibles.

Dans de telles installations une partie des liaisons est effectuée au niveau de la face avant des châssis, au moins une partie des cartes de circuit sont connectées avec des câbles électriques ou optiques, au moyen de connecteurs constitués de deux parties séparables, dont l'une, fixée sur une face avant, est connectée sur la carte de circuit correspondante et dont l'autre est fixée à l'extrémité d'un câble d'amenée de signaux provenant de l'extérieur ou allant vers l'extérieur de la carte considérée.

Dans les locaux où sont logées les installations de télécommunication, le cheminement des câbles d'amenée des signaux peut s'effectuer, par exemple, dans des caniveaux ménagés dans le sol, sur platelage de plafond, ainsi que dans des goulottes courant sur les murs. Les armoires ou bâtis reçoivent généralement les câbles sous forme de faisceaux guidés dans des goulottes verticales, d'où les groupes de câbles destinés à alimenter les différents châssis de l'armoire ou du bâti sont prélevés, à des niveaux correspondant, respectivement, à ceux de ces châssis. Le nombre de câbles alimentant chaque châssis est relativement grand et peut atteindre plusieurs dizaines.

Le document US-A-4 136 257, par exemple, décrit une goulotte comportant une pièce allongée ayant une section en U, fermée au moyen d'un couvercle allongé enclicable. Cette pièce comporte deux séries d'organes de support de câble, allongés, séparés les uns des autres, et s'étendant parallèlement entre eux. Les deux séries étant respectivement situées dans deux plans parallèles, l'espace entre ces deux plans constitue un canal susceptible de contenir des câbles. Un espace entre deux organes consécutifs de chaque série permet l'entrée et la sortie de câbles. Chaque organe de support comporte une extrémité libre munie d'une lèvre qui collabore avec une lèvre du couvercle pour permettre l'enclicage du couvercle, une fois que tous les câbles ont été installés dans la goulotte.

Au cours du montage ainsi que lors de transformations et adaptations ultérieures des installations de télécommunication, il est généralement nécessaire d'effectuer un grand nombre d'opérations de branchement et de débranchement de câbles, ainsi que de mise en place et d'enlèvement de cartes de circuit, de même que de procéder à des interventions sur des cartes de circuit situées dans un châssis seul, ou bien disposé au-dessus ou au-dessous d'un châssis déjà équipé ou non. Au cours de ces opérations, on se trouve en présence d'un grand nombre de câbles et de connecteurs débranchés, en attente de connexion, dont la multiplicité pose souvent des problèmes d'encombrements et d'identification des connecteurs, en gênant les interventions sur les cartes et en occasionnant un risque non négligeable d'erreur de raccordement.

D'autre part, on sait que les éléments conducteurs élémentaires des câbles sont relativement fragiles, en particulier dans le cas de fibres optiques, de sorte qu'il existe un risque important de détérioration ou de rupture de ces éléments s'ils sont soumis à des changements d'orientation selon un trop faible rayon de courbure, notamment lorsque les câbles viennent à s'emmêler au cours des différentes opérations effectuées lors du montage ou de la transformation des installations.

L'invention a notamment pour but d'apporter une solution aux problèmes susmentionnés et de réduire les risques indiqués plus haut, en assurant, en particulier, un meilleur cheminement des câbles entre les goulottes d'alimentation des armoires ou bâtis et les faces avant des cartes de circuit, une bonne identification des câbles et une bonne indexation des éléments de raccordement, et également en prévoyant des organes d'accrochage temporaire permettant de placer les éléments de connecteur débranché dans des positions de repos bien définies, ne gênant pas les opérations de branchement et de débranchement des autres connecteurs, ainsi que les interventions sur les cartes de circuit, tout en permettant de retrouver et d'identifier correctement ces éléments au moment de les brancher, de même qu'en permettant de guider les câbles à leur sortie ou à leur entrée des goulottes d'alimentation, avec un rayon de courbure ayant une valeur toujours supérieure à la limite inférieure autorisée.

A cet effet, l'objet de l'invention est un dispositif de soutien et de guidage de câbles de transmission de signaux électriques ou lumineux, comportant deux séries d'organes de support de câble, situées respectivement dans deux plans parallèles, l'espace entre ces deux plans constituant un canal susceptible de contenir des câbles; caractérisé en ce qu'il est constitué de pièces comportant chacune l'une des deux séries d'organes de support, ces organes étant allongés, séparés les uns des autres, et s'étendant parallèlement entre eux, dans un même plan, perpendiculairement à la longueur de la pièce, entre une extrémité reliée à une partie commune allongée de la pièce et une extrémité libre, tous ces organes de support étant disposés d'un même côté de cette partie commune, et en ce que chaque pièce comporte des moyens de fixation pour assembler lesdites pièces deux par deux, dans une position telle que le plan contenant la série d'organes de support d'une première pièce est parallèle au plan contenant la série d'organes de support d'une seconde pièce.

Avantageusement, lesdites pièces sont identiques et les organes de support de câble sont disposés de manière asymétrique, dans la direction longitudinale de chaque pièce, par rapport au milieu de celle-ci, de sorte que, lorsque deux pièces sont assemblées entre elles, leurs organes de support de câble respectifs sont disposés en alternance. Conformément à une forme d'exécution particulièrement avantageuse du dispositif, les extrémités libres d'au moins une partie des organes de support des câbles présentent des moyens pour limiter le déplacement latéral de câbles placés, dans le sens de la longueur de la pièce, en s'appuyant contre la partie de ces organes de support située entre leur extrémité libre et leur extrémité reliée à la partie commune allongée de la pièce.

Avantageusement, ladite pièce présente, au moins à l'une de ses extrémités, une surface incurvée.

Selon une forme d'exécution particulière du dispositif, ladite pièce comprend un longeron plat allongé solidaire d'un élément plat dont la partie centrale est réunie à angle droit avec un bord dudit longeron, sur la majeure partie de sa longueur, et dont chacune des deux extrémités présente une surface incurvée ladite partie centrale de l'élément étant crénelée de manière à former une série d'appendices séparés par des intervalles, avec une disposition asymétriques dans la direction longitudinale de la pièce, par rapport au milieu de celle-ci.

Avantageusement, les appendices sont associés par groupes de deux en présentant des intervalles relativement étroits entre deux appendices associés entre eux et des intervalles relativement larges entre deux groupes consécutifs de deux appendices associés.

Egalement de manière avantageuse, les extrémités libres desdits appendices sont recourbées à angle droit, du même côté que le longeron, sur une longueur égale à la largeur du longeron, de manière à former un crochet.

Par ailleurs, l'invention se rapporte à une pièce telle que définie dans les revendications 1 à 7.

L'invention sera bien comprise grâce à la description détaillée qui va suivre d'une forme d'exécution particulière d'un dispositif selon l'invention, cette description étant faite à titre d'exemple non limitatif, en se référant au dessin annexé, dans lequel:
La Fig. 1 est une vue en élévation, de face, d'une pièce élémentaire faisant partie du dispositif selon l'invention;
La Fig. 2 est une vue en plan de la pièce représentée à la Fig. 1;
La Fig. 3 est une vue en coupe de la pièce représentée aux Figures 1 et 2, selon le plan III-III indiqué à la Fig. 1;
La Fig. 4 est une vue en élévation, de face, d'un ensemble de deux pièces élémentaires constituant un râtelier de soutien et de guidage de câble;
La Fig. 5 est une vue en plan de l'ensemble représenté à la Fig. 4;
La Fig. 6 est une vue en coupe, selon le plan VI-VI indiqué à la Fig. 4, de l'ensemble représenté aux Figures 4 et 5;
La Fig. 7 est une vue partielle en perspective illustrant l'utilisation de l'ensemble selon l'invention, tel que représenté aux Figures 4 à 6, en tant que râtelier de guidage de câbles optiques monté sur un châssis équipé de cartes de circuit imprimé amovibles; et
La Fig. 8 est une vue en perspective montrant une armoire contenant plusieurs châssis de cartes de circuit équipés du dispositif de soutien et de guidage de câbles selon l'invention.

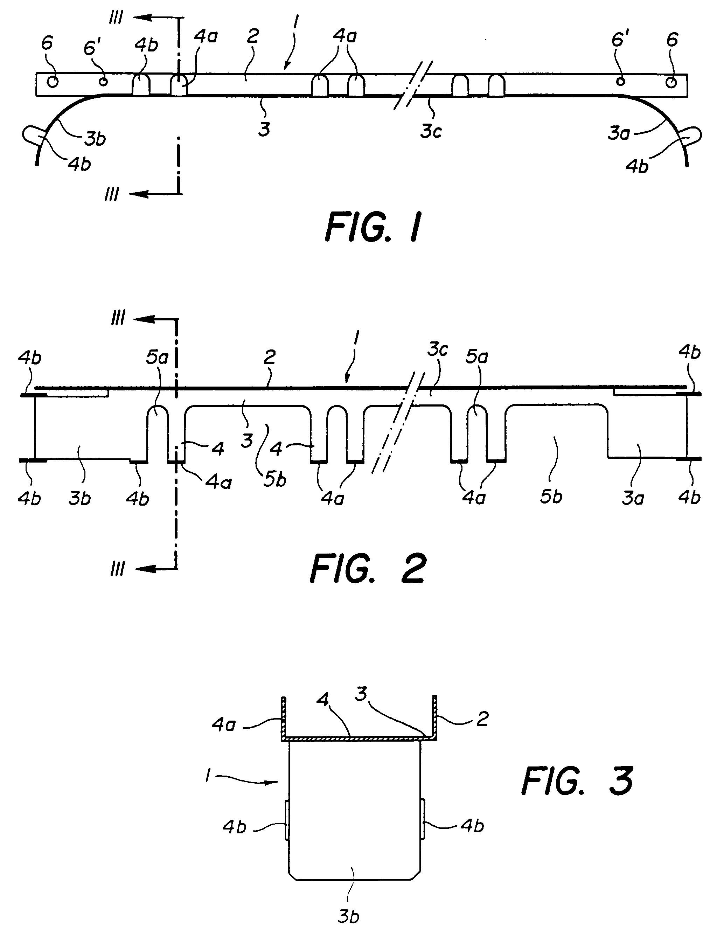

La pièce élémentaire 1, représentée aux Figures 1 à 3, se compose d'un longeron plat 2, formant une pièce d'un seul tenant avec un élément plat 3, de même épaisseur que le longeron 2. L'élément 3 se compose d'une partie centrale 3c dont un bord est réuni à angle droit avec un bord du longeron 2, sur la majeure partie de sa longueur, et de deux parties d'extrémités 3a et 3b, séparées du longeron 2 et incurvées en s'éloignant de celui-ci. La partie centrale 3c de l'élément 3 est crénelée et présente une série d'appendices plats 4 associés deux par deux, avec des intervalles 5a relativement étroits entre deux appendices 4 associés et des intervalles 5b relativement larges entre deux groupes consécutifs de deux appendices associés.

La disposition des appendices 4 et des intervalles 5a et 5b, par rapport au milieu de l'élément 3, est asymétrique. Plus précisément, alors qu'un premier appendice 4 est séparé par un intervalle étroit 5a du reste de la partie centrale 3c de l'élément 3 du côté de l'une des extrémités de cet élément (en l'occurrence, le côté correspondant à l'extrémité incurvée 3b), le dernier appendice 4 est séparé par un intervalle large 5b du reste de la partie centrale 3c de l'élément 3, du côté de l'autre extrémité incurvée 3a de cet élément.

Les extrémités libres 4a de chaque appendice 4 sont arrondies et recourbées à angle droit, du même côté que le longeron 2, sur une longueur pratiquement égale à la largeur de ce dernier, en formant un crochet. On remarquera que, en raison de la forme arrondie des extrémités des appendices 4, il apparaît, entre les extrémités de deux appendices 4 consécutifs, dans le plan de la vue de face représentée à la Fig. 1, un intervalle évasé vers le haut, dont la fonction sera indiquée dans la suite de la description.

Les bords latéraux des parties d'extrémités 3a et 3b de l'élément 3, ainsi que le bord libre de la partie centrale 3c précédant le premier appendice 4, du côté de l'extrémité 3b de l'élément 3, sont également munis de rebords 4b arrondis et recourbés à angle droit, ayant la même forme que les rebords 4a. Le rôle de ces rebords 4a et 4b sera également indiqué dans la suite de la description.

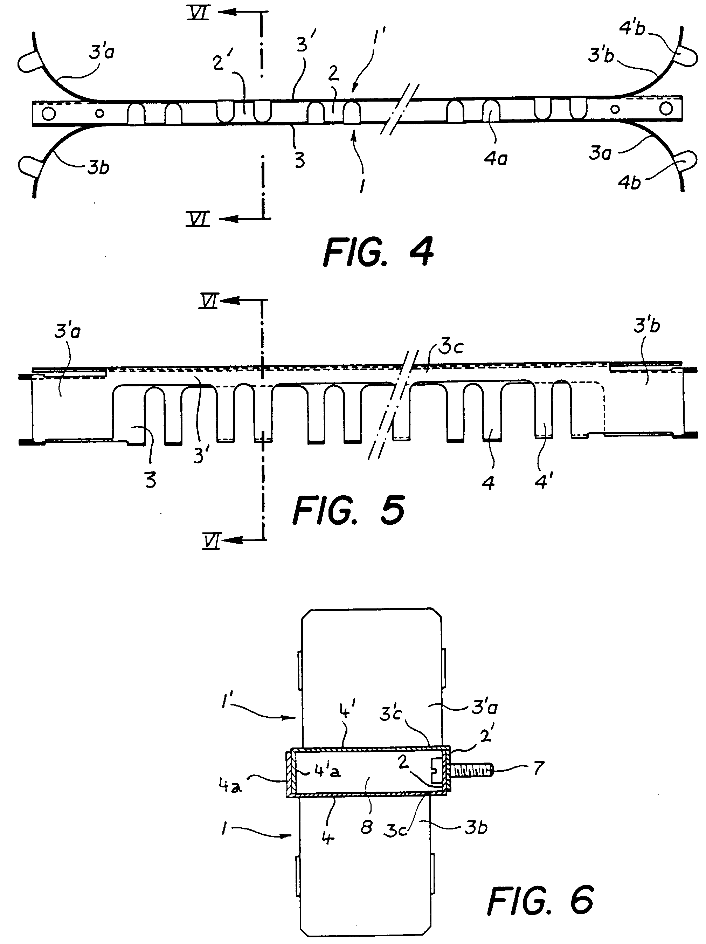

Le longeron 2 est muni de trous traversants cylindriques 6 et 6', de diamètres différents, pour le passage de vis de fixation 7 (dont l'une est représentée à la Fig. 6) prévues pour coopérer avec des moyens appropriés équipant soit le bâti soit le chassis, à un niveau tel que la fixation et le positionnement du dispositif selon l'invention ne gênent en rien la mise en place ou le retrait des cartes de circuit équipées. Avantageusement, ledit dispositif sera disposé à un niveau correspondant au-dessous de l'arête inférieure des faces avant pouvant équiper les cartes de circuit.

La pièce 1 est avantageusement réalisée par poinçonnage et pliage, à partir d'une tôle d'acier galvanisé ou d'une tôle de laiton. Elle pourrait également être constituée en tout autre matériau approprié, par exemple être constituée par une pièce venue de moulage en matière plastique rigide.

Comme on le voit aux Figures 4 et 5, lorsque deux pièces 1 et 1' sont assemblées entre elles, avec leurs longerons 2 et 2' appliqués l'un contre l'autre, en se recouvrant, et leurs éléments 3 et 3' respectifs placés l'un au-dessus de l'autre, la partie incurvée d'extrémité 3a de l'un des éléments 3 se trouve en regard de la partie incurvée 3'b d'extrémité de l'autre élément 3', ces deux parties incurvées s'éloignant l'une de l'autre vers leurs extrémités libres respectives.

Les appendices 4 de la pièce 1 sont alors placés dans un plan parallèle à celui des appendices 4' de la pièce 1', avec une disposition alternée des appendices associés deux par deux de l'une et l'autre pièce, lorsque leur assemblage est observé selon la vue en plan représentée à la Fig. 5.

Comme on le voit à la Fig. 6, un espace tubulaire 8 est délimité, dans la direction verticale, entre les parties centrales respectives 3c et 3'c des deux pièces 1 et 1' assemblées et, dans la direction horizontale, d'un côté entre les longerons 2 et 2' et de l'autre entre les parties d'extrémités 4a et 4'a des appendices 4 et 4' (les extrémités 4a des appendices 4 de la pièce 1 étant recourbées vers le haut et les extrémités 4'a des appendices 4' de la pièce 1' étant recourbées vers le bas).

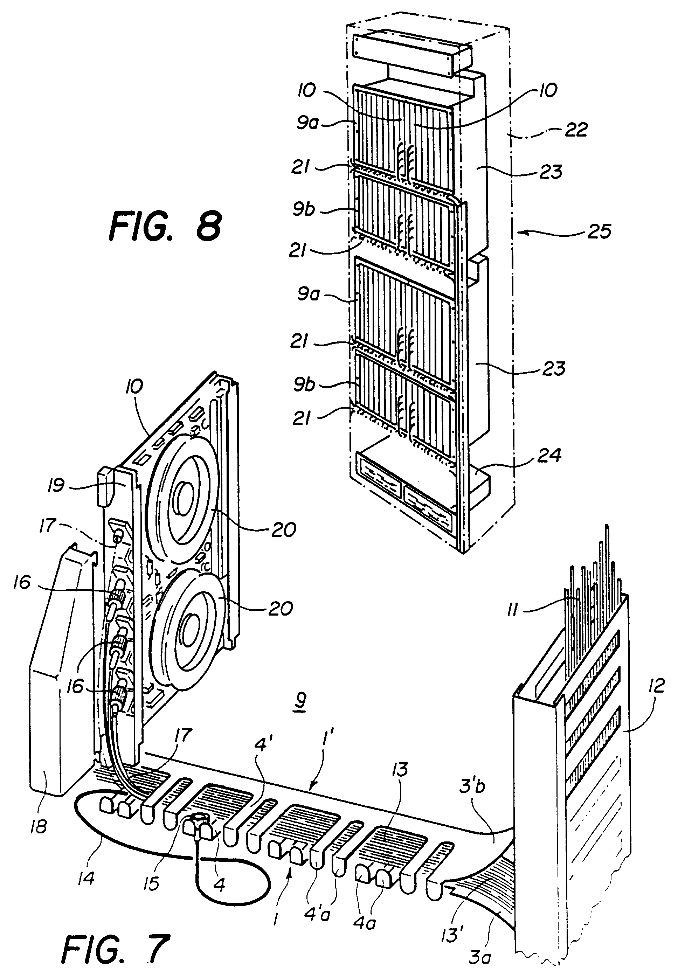

La Fig. 7 représente partiellement un ensemble de deux pièces 1 et 1' assemblées entre elles selon la configuration qui vient d'être décrite, de façon à constituer un râtelier de guidage de câbles optiques fixé en position horizontale, au bas d'un châssis 9 muni d'une pluralité de cartes de circuit 10, dont une seule est représentée au dessin.

Un faisceau 11 de câbles optiques est guidé dans une goulotte verticale 12 disposée parallèlement à une arête frontale d'une armoire ou bâti (non représenté) contenant le châssis 9. Un certain nombre de câbles optiques constituant en général ce que l'on appelle des "jarretières optiques" 13 ou 13' sortent de, ou rentrent dans, la goulotte 12 au niveau du râtelier de guidage constitué par l'assemblage des pièces 1 et 1' et sont guidés vers l'espace ou en dehors de l'espace tubulaire 8 (Fig. 6) en s'appliquant, selon que les câbles proviennent ou se dirigent en direction du haut ou du bas de ladite goulotte, contre la partie d'extrémité incurvée 3'b ou 3a des pièces 1' ou 1 respectivement, qui forment des déflecteurs protégeant les jarretières optiques en empêchant que les câbles soient soumis à des rayons de courbure trop faibles. Du fait de la perspective choisie pour cette figure 7, seules les jarretières 13' venant du bas de cette goulotte ou allant vers le bas de celle-ci, sont visibles, mais il est bien évident que les jarretières 13 venant du haut de la goulotte ou allant vers le haut de celle-ci, suivent un chemin équivalent contre la partie incurvée 3'b.

On remarquera en outre, bien que non visible sur cette figure 7, que l'autre extrémité du dispositif de guidage parfaitement symétrique permet exactement les mêmes guidages et orientations.

Les câbles optiques constituant les jarretières 13 et 13' sont soutenus et guidés dans l'espace tubulaire 8 du râtelier constitué par l'assemblage des deux pièces 1 et 1', entre les organes 4 de la pièce inférieure 1 qui les supportent, et les organes 4' de la pièce supérieure 1' qui les guident et les retiennent.

Chaque câble optique constituant les jarretières 13 ou 13', tel que le câble 14, peut facilement être prélevé dans l'espace 5b, entre deux organes 4' consécutifs non associés entre eux, de la pièce 1' et être mis en position d'attente de branchement avec la partie de connecteur 15, fixée à son extrémité, reposant entre deux organes 4 de la pièce 1 associés entre eux. La mise en place et l'enlèvement de la partie de connecteur 15 sont facilités par le fait que, comme indiqué plus haut, les extrémités repliées des organes 4 sont arrondies.

Dans l'exemple illustré à la Fig. 7, la carte, qui est munie de quatre galettes de lovage 20 de fibres optiques, superposées deux à deux, est raccordée à quatre câbles optiques 17 de l'ensemble des jarretières 13 et 13' au moyen de connecteurs optiques 16 respectifs, de manière connue en soi. On voit que le râtelier de guidage constitué par l'assemblage des pièces 1 et 1', permet d'éviter tout emmelage des jarretières optiques 13 et 13' connectées à la carte 10 et de substituer l'un quelconque des câbles 17 par le câble 14 mis en position d'attente, sans risque de confusion. La mise en place d'un capot amovible de protection 18 des câbles 17 et des connecteurs optiques 16 sur la face avant 19 de la carte 10 est également facilitée par le guidage des jarretières optiques 13 et 13' dans le râtelier ainsi d'ailleurs que l'extraction ou la mise en place d'autres cartes 10 quel que soit leur emplacement respectif, adjacent ou éloigné de celui ou de ceux des cartes déjà en place.

L'écartement mutuel (correspondant à un intervalle large 5b) de deux organes 4' consécutifs non associés entre eux est suffisamment grand pour permettre d'intervenir sur une ligne sans devoir sortir les câbles correspondant aux autres lignes, ainsi que de charger le râtelier, en y plaçant un ou plusieurs câbles, sans aucun démontage de pièce.

L'armoire 25, représentée à la Fig. 8, comprend un coffret 22 de protection dans lequel sont montés deux bâtis 23 contenant chacun deux châssis de cartes de circuit imprimé 9a et 9b. Des râteliers 21 de soutien et de guidage selon l'invention, correspondant à la forme d'exécution qui vient d'être décrite, sont montés horizontalement entre deux châssis superposés 9a et 9b, ou au bas de chacun des deux châssis inférieurs 9b, à un niveau, dans les deux cas, légèrement inférieur à celui du bas des faces avant de chacun des châssis.

Dans chacun des châssis de cartes de circuit, on a représenté, de manière schématique, les faces avant de deux cartes 10 connectées chacune avec quatre câbles, respectivement prélevés, dans un intervalle voisin de la face avant de la carte correspondante, de l'espace de guidage du râtelier 21 correspondant.

L'armoire 25 comprend également un châssis 24 de lovage de fibres optiques qui constitue pour les câbles optiques, d'arrivée ou de départ de l'armoire, une réserve individuelle de chacune des fibres constituant lesdits câbles aussi bien pour l'exploitation des liaisons que pour les réparations éventuelles.

On voit que les câbles optiques sont parfaitement guidés et rangés et qu'il est possible d'intervenir sur chacune des cartes 10 équipant les châssis sans être gêné par les câbles connectés avec les autres cartes du même châssis ou du châssis placé au dessus ou au dessous.

Bien que l'invention ait été décrite ci-dessus en se référant essentiellement à une forme d'exécution particulière, décrite à titre d'exemple non limitatif, des variations peuvent être apportées à cette forme d'exécution en restant dans le cadre de l'invention.

Par exemple, la forme des appendices 4 ainsi que leur nombre et leur disposition relative pourraient être différents de ceux indiqués dans la description qui précèdent. En particulier, chaque groupe de deux appendices 4 associés pourrait être remplacé par un appendice unique (en supprimant toutefois la possibilité de placer une partie de connecteur 15 entre deux appendices 4 associés) ou bien chaque groupe pourrait comprendre un nombre d'appendices 4 associés différent de deux, par exemple trois ou quatre.

## Revendications

1. Dispositif de soutien et de guidage de câbles de transmission de signaux électriques ou lumineux, comportant deux séries d'organes (4 ; 4') de support de câble, situées respectivement dans deux plans parallèles, l'espace entre ces deux plans constituant un canal susceptible de contenir des câbles ;
caractérisé en ce qu'il est constitué de pièces (1 ; 1') comportant chacune l'une des deux séries d'organes de support (4 ; 4'), ces organes étant allongés, séparés les uns des autres, et s'étendant parallèlement entre eux, dans un même plan, perpendiculairement à la longueur de la pièce (1 ; 1') entre une extrémité reliée à une partie commune (2;2') allongée de la pièce et une extrémité libre, tous ces organes de support (4;4') étant disposés d'un même côté de cette partie commune (2;2'),
et en ce que chaque pièce (1 ; 1') comporte des moyens de fixation (2, 6, 6') pour assembler lesdites pièces (1;1') deux par deux, dans une position telle que le plan contenant la série d'organes de support (4) d'une première pièce (1) est parallèle au plan contenant la série d'organes de support (4') d'une seconde pièce (1').

2. Dispositif selon la revendication 1, caractérisé en ce que lesdites pièces (1;1') sont identiques; et en ce que lesdits organes de support (4,4') sont disposés de manière asymétrique, dans la direction longitudinale de chaque pièce, par rapport au milieu de celle-ci, de sorte que, lorsque deux pièces sont assemblées entre elles, leurs organes de support de câbles respectifs sont disposés en altemance.

3. Dispositif selon la revendication 1 ou la revendication 2, caractérisé en ce que les extrémités libres d'au moins une partie des organes (4,4') de support de câbles présentent des moyens (4a, 4a') pour limiter le déplacement latéral de câbles placés, dans le sens de la longueur de la pièce, en s'appuyant contre la partie de ces organes de support (4;4') située entre leur extrémité libre et leur extrémité reliée à la partie commune allongée (2;2') de la pièce (1;1').

4. Dispositif selon l'une des revendications 1 à 3, caractérisé en ce que ladite pièce (1;1') présente, au moins à l'une de ses extrémités, une surface incurvée (3a, 3b, 3a', 3b').

5. Dispositif selon l'une des revendications 1 ou 3 et la revendication 4, caractérisé en ce que ladite pièce (1;1') comprend un longeron plat allongé (2) solidaire d'un élément plat (3) dont la partie centrale (3c) est réunie à angle droit avec un bord dudit longeron (2), sur la majeure partie de sa longueur, et dont chacune des deux extrémités présente une surface incurvée (3a, 3b) ladite partie centrale (3c) de l'élément (3) étant crénelée de manière à former une série d'appendices (4) séparés par des intervalles, avec une disposition asymétrique dans la direction longitudinale de la pièce, par rapport au milieu de celle-ci.

6. Dispositif selon la revendication 5, caractérisé en ce que les appendices (4) sont associés par groupes de deux en présentant des intervalles relativement étroits (5a) entre deux appendices associés entre eux et des intervalles relativement larges (5b) entre deux groupes consécutifs de deux appendices associés.

7. Dispositif selon la revendication 3 et l'une des revendications 5 ou 6, caractérisé en ce que les extrémités libres (4a) des appendices (4) sont recourbées à angle droit, du même côté que le longeron (2), sur une longueur égale à la largeur du longeron (2); de manière à former un crochet.

8. Pièce telle que définie dans l'une des revendications 1 à 7.

## Patentansprüche

1. Vorrichtung zum Halten und Führen von Kabeln zur Übertragung elektrischer oder optischer Signale, die zwei Reihen von Kabelhalteorganen (4; 4') in zwei parallelen Ebenen besitzen, wobei der Zwischenraum zwischen diesen beiden Ebenen einen Kanal für Kabel bildet, dadurch gekennzeichnet, daß die Vorrichtung aus Bauteilen (1; 1') besteht, die je eine der beiden Reihen von Kabelhalteorganen (4; 4') besitzen, wobei diese Organe länglich und voneinander getrennt sind sowie parallel zueinander in einer gemeinsamen Ebene senkrecht zur Länge des Bauteils (1; 1') zwischen einem an einen gemeinsamen länglichen Bereich (2; 2') des Bauteils angeschlossenen Ende und einem freien Ende verlaufen, wobei alle Halteorgane (4; 4') auf einer gemeinsamen Seite dieses gemeinsamen Bereichs (2; 2') liegen, und daß jedes Bauteil (1; 1') Befestigungsmittel (2, 6, 6') aufweist, um die Bauteile (1; 1') paarweise in einer solchen Stellung zusammenzubauen, daß die Ebene, in der die Serie von Halteorganen (4) eines ersten Bauteils (1) verläuft, parallel zu der Ebene liegt, die die Serie von Halteorganen (4') eines zweiten Bauteils (1') enthält.

2. Vorrichtung nach Anspruch 1, dadurch gekennzeichnet, daß die Bauteile (1, 1') einander gleichen und daß die Halteorgane (4, 4') symmetrisch in der Längsrichtung jedes Bauteils bezüglich dessen Mitte angeordnet sind, so daß ihre jeweiligen Kabelhalteorgane auf Lücke zueinander liegen, wenn die beiden Bauteile zusammengefügt sind.

3. Vorrichtung nach Anspruch 1 oder Anspruch 2, dadurch gekennzeichnet, daß die freien Enden mindestens eines Teils der Kabelhalteorgane (4, 4') Mittel (4a, 4a') zur Begrenzung der seitlichen Verschiebung von in Längsrichtung des Bauteils verlaufenden Kabel besitzt, wobei die Kabel gegen den Bereich der Halteorgane (4; 4') anliegen, der zwischen ihrem freien Ende und ihrem an den länglichen gemeinsamen Bereich (2; 2') des Bauteils (1; 1') angeschlossenen Ende liegt.

4. Vorrichtung nach einem der Ansprüche 1 bis 3, dadurch gekennzeichnet, daß das Bauteil (1; 1') zumindest an einem seiner Enden eine gekrümmte Oberfläche (3a, 3b, 3a', 3b') besitzt.

5. Vorrichtung nach einem der Ansprüche 1 oder 3 und Anspruch 4, dadurch gekennzeichnet, daß das Bauteil (1; 1') einen flachen Längsträger (2) enthält, der fest mit einem flachen Element (3) verbunden ist, dessen zentraler Bereich (3c) rechtwinklig mit einem Rand des Längsträgers (2) über dessen größten Teil von dessen Länge verbunden ist, während jedes der beiden Enden eine gekrümmte Oberfläche (3a, 3b) besitzt und der zentrale Bereich (3c) des Elements (3) gezahnt ist, so daß sich eine Reihe von Vorsprüngen (4) ergibt, die durch Zwischenräume mit einer unsymmetrischen Anordnung in Längsrichtung des Bauteils bezüglich der Mitte des Bauteils voneinander getrennt sind.

6. Vorrichtung nach Anspruch 5, dadurch gekennzeichnet, daß die Vorsprünge (4) paarweise einander zugeordnet sind und relativ enge Zwischenräume (5a) zwischen zwei Vorsprüngen eines Paars sowie relativ große Zwischenräume (5b) zwischen zwei aufeinanderfolgenden Paaren von Vorsprüngen besitzen.

7. Vorrichtung nach Anspruch 3 und einem der Ansprüche 5 oder 6, dadurch gekennzeichnet, daß die freien Enden (4a) der Vorsprünge (4) rechtwinklig zur selben Seite wie der Längsträger (2) umgebogen sind, und zwar über eine Länge gleich der Breite des Längsträgers (2), so daß sich ein Haken ergibt.

8. Bauteil gemäß der Definition nach einem der Ansprüche 1 bis 7.

## Claims

1. Device for supporting and guiding cables conveying electrical or light signals made up of two series of cable support members (4; 4') in respective parallel planes, the space between said two planes constituting a passage adapted to contain cables;
characterised in that it comprises components (1; 1') each comprising two series of parallel separate coplanar elongate cable support members (4; 4') perpendicular to the length of the component (1; 1') and having one end joined to a common elongate part (2; 2') of said component and a free end, in which device all said support members (4; 4') are disposed on a common side of said common part (2; 2'),
and in that each component (1; 1') includes fixing means (2, 6, 6') for assembling said components (1; 1') in pairs in a position such that the plane containing the series of support members (4) of a first component (1) is parallel to the plane containing the series of support members (4') of a second component (1').

2. Device according to claim 1 characterised in that said components (1; 1') are identical and in that said support members (4; 4') are disposed asymmetrically along each component relative to the centre thereof so that when two components are assembled together their respective cable support members alternate.

3. Device according to claim 1 or claim 2 characterised in that the free ends of at least some of the cable support members (4; 4') comprise means (4a; 4a') for limiting lateral displacement of cables disposed in the lengthwise direction of the component bearing against the part of said support members (4; 4') between their free end and their end joined to the common elongate part (2; 2') of the component (1; 1').

4. Device according to any one of claims 1 to 3 characterised in that said component (1; 1') has a curved surface (3a, 3b, 3a', 3b') at one end at least.

5. Device according to claim 1 or claim 3 and claim 4 characterised in that said component (1; 1') comprises an elongate flat longitudinal member (2) fastened to a flat member (3) whose central part (3c) is joined at right angles to an edge of said longitudinal member (2) over the major part of its length and each end of which has a curved surface (3a, 3b), said central part (3c) of said member (3) being crenellated so as to form a series of appendages (4) separated by gaps with an asymmetric disposition along said component relative to the centre thereof.

6. Device according to claim 5 characterised in that the appendages (4) are associated in pairs with relatively narrow gaps (5a) between the appendages of a pair and relatively large gaps (5b) between consecutive pairs of appendages.

7. Device according to claim 3 and claim 5 or claim 6 characterised in that a length equal to the width of the longitudinal member (2) of the free ends (4a) of the appendages (4) is bent at right angles in the same direction as the longitudinal member (2) to form a hook.

8. Component according to any one of claims 1 to 7.
